# EUROPEAN PATENT SPECIFICATION

(11) **EP 2 976 800 B1**
(45) Date of publication and mention of the grant of the patent: **02.08.2017**
(21) Application number: 14708745.6
(22) Date of filing: 20.02.2014
(51) Int. Cl.: H01M 10/056, H01M 10/0525, H01M 2/16

(54) **LITHIUM BATTERY WITH COMPOSITE SOLID ELECTROLYTE**
LITHIUMBATTERIE MIT ZUSAMMENGESETZTEM FESTELEKTROLYT
BATTERIE AU LITHIUM COMPRENANT UN ÉLECTROLYTE SOLIDE COMPOSITE

(30) Priority: 21.02.2013 US 201361767658 P
(43) Date of publication of application: 27.01.2016
(73) Proprietor: Robert Bosch GmbH, 70442 Stuttgart (DE)
(72) Inventor: CHRISTENSEN, John, Mountain View, CA 94043 (US); ALBERTUS, Paul, Washington, DC 20012 (US); KNUDSEN, Edward, Menlo Park, CA 94025 (US); LOHMANN, Timm, Mountain View, CA 94043 (US); KOZINSKY, Boris, Waban, MA 02468 (US)
(74) Representative: Bee, Joachim
(86) International application number: PCT/US2014/017490
(87) International publication number: WO 2014/130725

(56) References cited:
- EP-A2- 1 372 208
- US-A1- 2004 142 244
- US-A1- 2005 186 469
- US-A1- 2007 037 058
- US-A1- 2011 014 524

## Description

This application claims priority under 35 U.S.C. § 119 to U.S. Provisional Application No. 61/767,658, filed on February 21, 2013.

### Field

This disclosure relates to batteries and more particularly to lithium based batteries.

### Background

US 2007/037058 A1 describes compliant seal structures for protected active metal anodes.

US 2011/014524 A1 describes an anode for use in electrochemical cells.

EP 1 372 208 A2 describes a lithium ion secondary cell.

Rechargeable lithium-ion batteries are attractive energy storage systems for portable electronics and electric and hybrid-electric vehicles because of their high specific energy compared to other electrochemical energy storage devices. As discussed more fully below, a typical Li-ion cell contains a negative electrode, a positive electrode, and a separator region between the negative and positive electrodes. Both electrodes contain active materials that insert or react with lithium reversibly. In some cases the negative electrode may include lithium metal, which can be electrochemically dissolved and deposited reversibly. The separator contains an electrolyte with a lithium cation, and serves as a physical barrier between the electrodes such that none of the electrodes are electronically connected within the cell.

Typically, during charging, there is generation of electrons at the positive electrode and consumption of an equal amount of electrons at the negative electrode, and these electrons are transferred via an external circuit. In the ideal charging of the cell, these electrons are generated at the positive electrode because there is extraction via oxidation of lithium ions from the active material of the positive electrode, and the electrons are consumed at the negative electrode because there is reduction of lithium ions into the active material of the negative electrode. During discharging, the exact opposite reactions occur.

When high-specific-capacity negative electrodes such as a metal are used in a battery, the maximum benefit of the capacity increase over conventional systems is realized when a high-capacity positive electrode active material is also used. For example, conventional lithium-intercalating oxides (e.g., LiCoO₂, LiNi_{0.8}Co_{0.15}Al₀.₀₅O₂, Li_{1.1}Ni_{0.3}Co_{0.3}Mn_{0.3}O₂) are typically limited to a theoretical capacity of ∼280 mAh/g (based on the mass of the lithiated oxide) and a practical capacity of 180 to 250 mAh/g, which is quite low compared to the specific capacity of lithium metal, 3863 mAh/g. The highest theoretical capacity achievable for a lithium-ion positive electrode is 1794 mAh/g (based on the mass of the lithiated material), for Li₂O. Other high-capacity materials include BiF₃ (303 mAh/g, lithiated), FeF₃ (712 mAh/g, lithiated), and others. Unfortunately, all of these materials react with lithium at a lower voltage compared to conventional oxide positive electrodes, hence limiting the theoretical specific energy. Nonetheless, the theoretical specific energies are still very high (> 800 Wh/kg, compared to a maximum of ∼500 Wh/kg for a cell with lithium negative and conventional oxide positive electrodes, which may enable an electric vehicle to approach a range of 300 miles or more on a single charge.

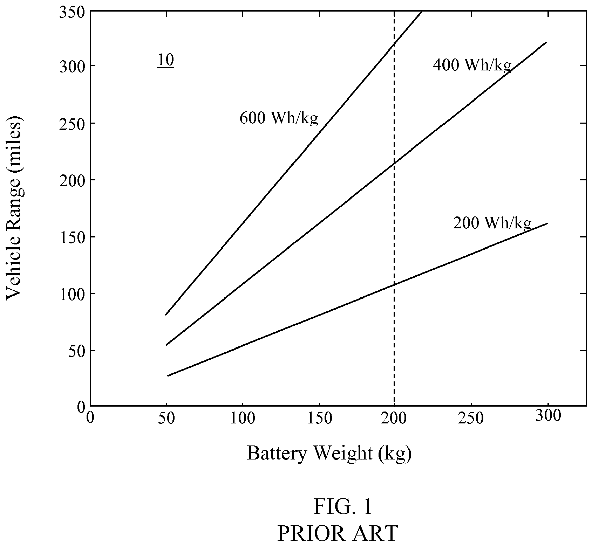

FIG. 1 depicts a chart 10 showing the range achievable for a vehicle using battery packs of different specific energies versus the weight of the battery pack. In the chart 10, the specific energies are for an entire cell, including cell packaging weight, assuming a 50% weight increase for forming a battery pack from a particular set of cells. The U.S. Department of Energy has established a weight limit of 200 kg for a battery pack that is located within a vehicle. Accordingly, only a battery pack with about 600 Wh/kg or more can achieve a range of 300 miles.

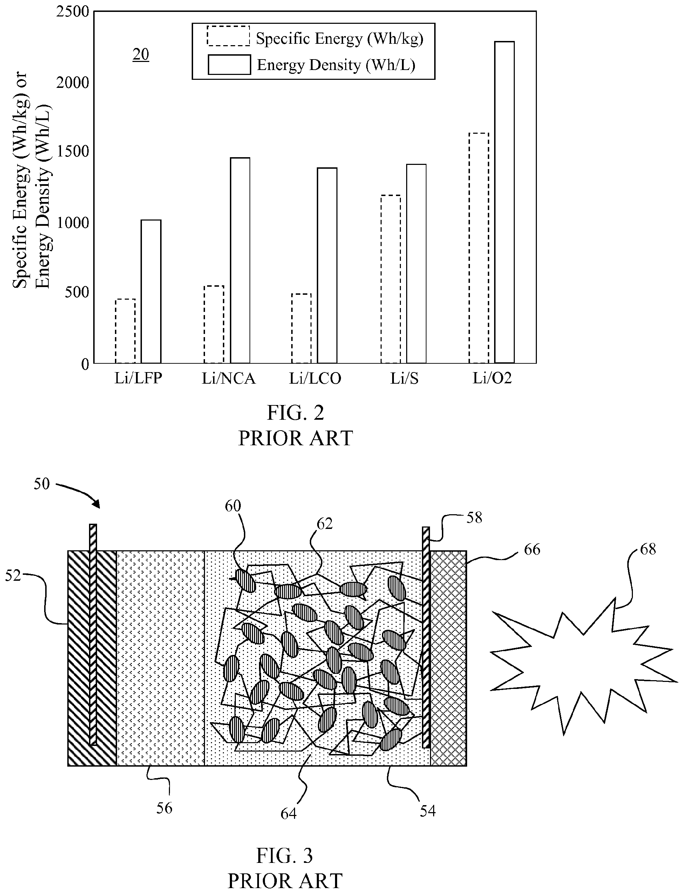

Various lithium-based chemistries have been investigated for use in various applications including in vehicles. FIG. 2 depicts a chart 20 which identifies the specific energy and energy density of various lithium-based chemistries. In the chart 20, only the weight of the active materials, current collectors, binders, separator, and other inert material of the battery cells are included. The packaging weight, such as tabs, the cell can, etc., are not included. As is evident from the chart 20, lithium/oxygen batteries, even allowing for packaging weight, are capable of providing a specific energy >600 Wh/kg and thus have the potential to enable driving ranges of electric vehicles of more than 300 miles without recharging, at a similar cost to typical lithium ion batteries. While lithium/oxygen cells have been demonstrated in controlled laboratory environments, a number of issues remain before full commercial introduction of a lithium/oxygen cell is viable as discussed further below.

A typical lithium/oxygen electrochemical cell 50 is depicted in FIG. 3. The cell 50 includes a negative electrode 52, a positive electrode 54, a porous separator 56, and a current collector 58. The negative electrode 52 is typically metallic lithium. The positive electrode 54 includes electrode particles such as particles 60 possibly coated in a catalyst material (such as Au or Pt) and suspended in a porous, electrically conductive matrix 62. An electrolyte solution 64 containing a salt such as LiPF₆ dissolved in an organic solvent such as dimethyl ether or CH₃CN permeates both the porous separator 56 and the positive electrode 54. The LiPF₆ provides the electrolyte with an adequate conductivity which reduces the internal electrical resistance of the cell 50 to allow a high power.

A portion of the positive electrode 52 is enclosed by a barrier 66. The barrier 66 in FIG. 3 is configured to allow oxygen from an external source 68 to enter the positive electrode 54 while filtering undesired components such as gases and fluids. The wetting properties of the positive electrode 54 prevent the electrolyte 64 from leaking out of the positive electrode 54. Alternatively, the removal of contaminants from an external source of oxygen, and the retention of cell components such as volatile electrolyte, may be carried out separately from the individual cells. Oxygen from the external source 68 enters the positive electrode 54 through the barrier 66 while the cell 50 discharges and oxygen exits the positive electrode 54 through the barrier 66 as the cell 50 is charged. In operation, as the cell 50 discharges, oxygen and lithium ions are believed to combine to form a discharge product Li₂O₂ or Li₂O in accordance with the following relationship:

*Li ↔ Li⁺* + *e⁻* (negative electrode)

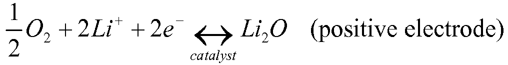

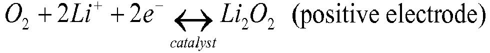

The positive electrode 54 in a typical cell 50 is a lightweight, electrically conductive material which has a porosity of greater than 80% to allow the formation and deposition/storage of Li₂O₂ in the cathode volume. The ability to deposit the Li₂O₂ directly determines the maximum capacity of the cell. In order to realize a battery system with a specific energy of 600 Wh/kg or greater, a plate with a thickness of 100 µm must have a capacity of about 20 mAh/cm².

Materials which provide the needed porosity include carbon black, graphite, carbon fibers, carbon nanotubes, and other non-carbon materials. There is evidence that each of these carbon structures undergo an oxidation process during charging of the cell, due at least in part to the harsh environment in the cell (pure oxygen, superoxide and peroxide ions, formation of solid lithium peroxide on the cathode surface, and electrochemical oxidation potentials of >3V (vs. Li/Li⁺)).

A number of investigations into the problems associated with Li-oxygen batteries have been conducted as reported, for example, by Beattie, S., D. Manolescu, and S. Flair, "High-Capacity Lithium-Air Cathodes," Journal of the Electrochemical Society, 2009. 156: p. A44, Kumar, B., et al., "A Solid-State, Rechargeable, Long Cycle Life Lithium-Air Battery, " Journal of the Electrochemical Society, 2010. 157: p. A50, Read, J., "Characterization of the lithium/oxygen organic electrolyte battery," Journal of the Electrochemical Society, 2002. 149: p. A1190, Read, J., et al., "Oxygen transport properties of organic electrolytes and performance of lithium/oxygen battery," Journal of the Electrochemical Society, 2003. 150: p. A1351, Yang, X. and Y. Xia, "The effect of oxygen pressures on the electrochemical profile of lithium/oxygen battery," Journal of Solid State Electrochemistry: p. 1-6, and Ogasawara, T., et al., "Rechargeable Li2O2 Electrode for Lithium Batteries," Journal of the American Chemical Society, 2006. 128(4): p. 1390-1393.

While some issues have been investigated, several challenges remain to be addressed for lithium-oxygen batteries. These challenges include protecting the lithium metal (and possibly other materials) from moisture and other potentially harmful components of air (if the oxygen is obtained from the air), designing a system that achieves acceptable specific energy and specific power levels, reducing the hysteresis between the charge and discharge voltages (which limits the round-trip energy efficiency), and improving the number of cycles over which the system can be cycled reversibly.

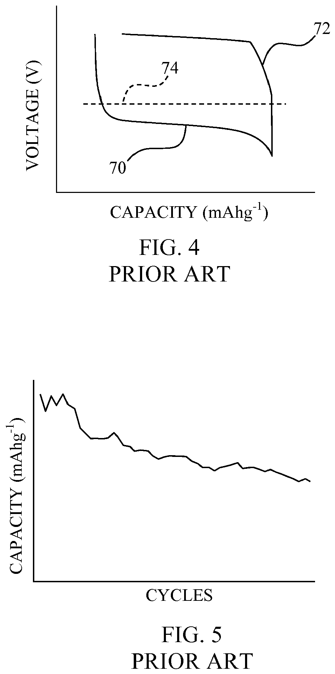

The limit of round trip efficiency occurs due to an apparent voltage hysteresis as depicted in FIG. 4. In FIG. 4, the discharge voltage 70 (approximately 2.5 to 3 V vs. Li/Li⁺) is much lower than the charge voltage 72 (approximately 4 to 4.5 V vs. Li/Li⁺). The equilibrium voltage 74 (or open-circuit potential) of the lithium/oxygen system is approximately 3 V. Hence, the voltage hysteresis is not only large, but also very asymmetric.

The large over-potential during charge may be due to a number of causes. For example, reaction between the Li₂O₂ and the conducting matrix 62 may form an insulating film between the two materials. Additionally, there may be poor contact between the solid discharge products Li₂O₂ or Li₂O and the electronically conducting matrix 62 of the positive electrode 54. Poor contact may result from oxidation of the discharge product directly adjacent to the conducting matrix 62 during charge, leaving a gap between the solid discharge product and the matrix 52.

Another mechanism resulting in poor contact between the solid discharge product and the matrix 62 is complete disconnection of the solid discharge product from the conducting matrix 62. Complete disconnection of the solid discharge product from the conducting matrix 62 may result from fracturing, flaking, or movement of solid discharge product particles due to mechanical stresses that are generated during charge/discharge of the cell. Complete disconnection may contribute to the capacity decay observed for most lithium/oxygen cells. By way of example, FIG. 5 depicts the discharge capacity of a typical Li/oxygen cell over a period of charge/discharge cycles.

Other physical processes which cause voltage drops within an electrochemical cell, and thereby lower energy efficiency and power output, include mass-transfer limitations at high current densities. The transport properties of aqueous electrolytes are typically better than nonaqueous electrolytes, but in each case mass-transport effects can limit the thickness of the various regions within the cell, including the cathode. Reactions among O₂ and other metals may also be carried out in various media.

While the above described challenges are not insignificant, the most common failure mode for cells with Li metal anodes is that of dendrite growth and increase in electrode surface area. Needle-like dendrites can grow through the separator during charging of the cell, resulting in an internal short. "Soft shorts" that burn out rapidly result in a temporary self discharge of the cell, while "strong shorts" consisting of a higher, more stable contact area can lead to complete discharge of the cell, cell failure, and possibly thermal runaway.

While dendrites grow through the separator during charge, shorts can sometimes develop during discharge depending on the external pressure placed on the cell and/or internal volume changes that occur in both the negative and positive electrodes. Because Li metal is highly electronically conductive, surfaces tend to roughen as the metal is plated and stripped. Peaks in the surface grow as dendrites during charge. While the surface is smoothed during discharge, some roughness typically remains at the end of discharge and, depending on the depth of discharge, the overall roughness can be amplified from one cycle to the next.

Because the metal is essentially at the same electrochemical potential throughout, potential and, to a lesser extent, concentration gradients in the electrolyte phase drive the change in morphology. Previous Li dendrite growth modeling work has shown that the moving front of a dendrite tends to accelerate during cell charge due to the higher current density localized at the dendrite tip relative to its base. Application of thermodynamic models has shown that dendrite initiation (i.e., initial roughening of an almost perfectly smooth surface) can be suppressed by applying mechanical stress and selecting solid electrolytes with shear moduli on the order of 10 GPa at room temperature. The same models indicate that surface tension at metal-fluid interfaces is insufficient to suppress dendrite initiation.

Related to dendrite initiation and growth is development of the Li morphology, which tends to increase the electrode surface area with cycling and consumes solvent to generate fresh passivation layers. Formation of high-surface-area mossy Li tends to occur during low-rate deposition from a liquid electrolyte, especially if the salt concentration is high. The high surface area combined with high reactivity of Li and flammability of the organic solvent makes for a very reactive and dangerous cell.

Because of the enormous challenge involved in stabilizing the Li surface chemically and mechanically through the use of electrolyte additives, such that passivation remains in effect over hundreds to thousands of cycles, the preferred treatment for rechargeable Li-based cells is the use of a solid-electrolyte membrane that is mechanically robust and chemically stable against both electrodes. Such a barrier removes several simultaneous constraints that the liquid electrolyte otherwise must satisfy, but the requirements for its properties are nonetheless multifaceted and challenging to obtain in a single material. The barrier must be chemically stable with respect to some or all of the following: the liquid electrolyte in the positive electrode, electronic conductors and catalysts in the positive electrode, the metallic Li negative electrode, reactive species such as oxygen molecules and reaction intermediates, and (in aqueous cells) water.

Solid electrolytes must also have sufficient Li+ conductivity over the operating temperature range of the cell, negligible electronic conductivity, and high elastic modulus to prevent Li dendrite initiation.

One approach which uses a solid barrier involves the use of a poorly conducting amorphous material known as LiPON, which has been used successfully in thin film lithium-metal batteries. However, because of LiPON's low lithium conductivity, it is difficult to make cells with thick, high capacity electrodes and still maintain a desired rate of discharge.

Another approach involves the use of a block copolymer that includes lithium-conducting channels in a matrix of inactive polymer that has a high shear modulus, perhaps high enough to prevent lithium dendrite formation. This approach has several drawbacks: 1) the composite conductivity is too low at room temperature because the intrinsic conductivity of the conducting phase is low, and the high-shear-modulus phase does not conduct lithium ions, thus diluting the composite conductivity further; 2) polymers generally absorb liquids and therefore are not an effective barrier between lithium metal and liquid electrolytes in the positive electrode or separator. Hence, lithium-metal cells with such polymer electrolytes are typically used without any liquid electrolyte in the positive electrode, and instead the positive electrode must contain polymer electrolyte in order to provide a conducting network for lithium ions. All such cells must be operated at high temperature (70°C or higher) in order to achieve desired performance (energy density and power density).

A related approach that has been proposed recently is to embed grains of lithium-conducting ceramic or glass inside a conducting polymer (or block copolymer as described above). The candidate ceramics or glasses tend to have at least an order of magnitude higher ionic conductivity than the polymer matrix. Moreover, they provide some additional mechanical stiffness to the composite, which may be sufficient to prevent lithium dendrite initiation. Proposers of this approach hypothesize that lithium will conduct more rapidly through the ceramic or polymer grains, thereby raising the conductivity of the composite to an acceptable level while simultaneously improving its mechanical properties. However, this approach still does not prevent transport of liquids from the positive electrode to the negative electrode, and is therefore unlikely to provide, on its own, a solution for high-energy-density, high-power rechargeable lithium-metal batteries.

What is needed therefore is an inexpensive, robust, lightweight protection against dendrites formed in a cell. It would be beneficial if a solution to dendrite formation was a relatively thin (< 50 µm), pinhole-free solid-electrolyte layer.

### Summary

In accordance with the present invention, an electrochemical cell includes a negative electrode including a form of lithium, a positive electrode spaced apart from the negative electrode, a separator positioned between the negative electrode and the positive electrode, and a first lithium ion conducting and ionically insulating composite solid electrolyte layer positioned between the negative electrode and the positive electrode; wherein the first lithium ion conducting and ionically insulating composite solid electrolyte layer comprises a block copolymer matrix within which are embedded lithium-conducting particles of ceramic or glass; and a layer of fully dense lithium-conducting ceramic or glass.

In accordance with the present invention, a method of forming an electrochemical cell includes positioning a separator between a negative electrode including a form of lithium and a positive electrode, and positioning a first lithium ion conducting and ionically insulating composite solid electrolyte layer between the negative electrode and the positive electrode; wherein the first lithium ion conducting and ionically insulating composite solid electrolyte layer comprises a block copolymer matrix within which are embedded lithium-conducting particles of ceramic or glass; and a layer of fully dense lithium-conducting ceramic or glass.

### Brief Description of the Drawings

The above-described features and advantages, as well as others, should become more readily apparent to those of ordinary skill in the art by reference to the following detailed description and the accompanying figures in which:
FIG. 1 depicts a plot showing the relationship between battery weight and vehicular range for various specific energies;
FIG. 2 depicts a chart of the specific energy and energy density of various lithium-based cells;
FIG. 3 depicts a prior art lithium-oxygen (Li/oxygen) cell including two electrodes, a separator, and an electrolyte;
FIG. 4 depicts a discharge and charge curve for a typical Li/oxygen electrochemical cell;
FIG. 5 depicts a plot showing decay of the discharge capacity for a typical Li/oxygen electrochemical cell over a number of cycles; and
FIG. 6 depicts a schematic view of a lithium-oxygen (Li/oxygen) cell with two electrodes and a reservoir configured to exchange oxygen with a positive electrode for a reversible reaction with lithium which includes a solid electrolyte composite.

### DETAILED DESCRIPTION

For the purpose of promoting an understanding of the principles of the disclosure, reference will now be made to the embodiments illustrated in the drawings and described in the following written specification. It is understood that no limitation to the scope of the disclosure is thereby intended. It is further understood that this disclosure includes any alterations and modifications to the illustrated embodiments and includes further applications of the principles of the disclosure as would normally occur to one skilled in the art to which this disclosure pertains.

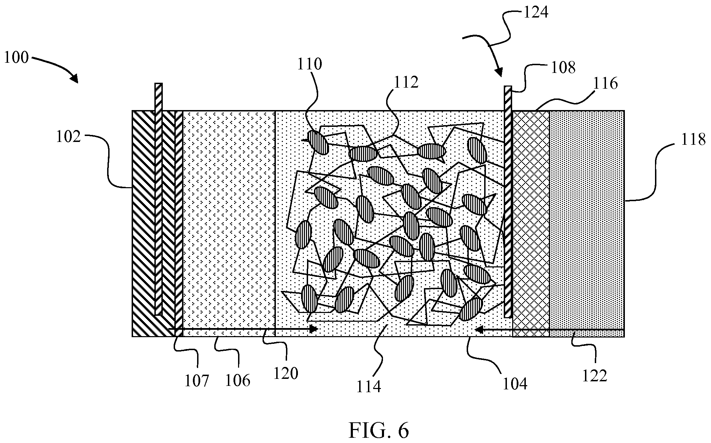

A schematic of an electrochemical cell 100 is shown in FIG. 6. The electrochemical cell 100 includes a negative electrode 102 separated from a positive electrode 104 by a porous separator 106. The negative electrode 102 may be formed from lithium metal or a lithium metal alloy.

The positive electrode 104 in this embodiment includes a current collector 108 and electrode particles 110, optionally covered in a catalyst material, suspended in a porous matrix 112. The porous matrix 112 is an electrically conductive matrix formed from a conductive material such as conductive carbon or a nickel foam, although various alternative matrix structures and materials may be used. The positive electrode inserts or reacts with lithium ions or negative counterions reversibly. The battery cathode may be, for instance, a sulfur or sulfur-containing material (e.g., PAN-S composite), an air electrode, or be comprised of any other active material or blend of materials that react with and/or insert Li cations and/or electrolyte anions.

The separator 106 prevents the negative electrode 102 from electrically connecting with the positive electrode 104. The battery further includes a thin composite solid electrolyte layer 107 between the lithium metal or alloy and the separator. In other embodiments, the layer 107 is positioned additionally and/or alternatively between the separator and the cathode. The composite solid electrolyte layer 107 is a solid electrolyte that conducts lithium ions but is ionically insulating. There are at least two layers in the composite solid electrolyte layer 107, including a layer of lithium-conducting polymer or block copolymer matrix within which are embedded lithium-conducting particles of ceramic or glass, and another layer of fully dense lithium-conducting ceramic or glass.

The purpose of this composite solid electrolyte layer 107 is to conduct lithium ions between the anode and the cathode while blocking electrons and any liquid electrolyte that may be contained in the positive electrode. The composite further prevents initiation and/or propagation of lithium dendrites from the negative electrode toward the positive electrode by mechanically suppressing roughening of the lithium.

The polymer layer in the composite solid electrolyte layer 107 is between 1 nm and 50 microns in thickness, preferably between 200 nm and 10 microns. It has a volume fraction of ceramic (or glass) particles of between 0.1 and 99%, preferably between 10 and 50%.

The dense ceramic (or other solid) layer in the composite solid electrolyte layer 107 is between 1 nm and 50 microns in thickness, preferably between 1 nm and 1 micron. There are a variety of candidate materials including, for the polymer matrix, Polyethylene oxide (PEO), a block copolymer with PEO Li-conducting phase and polystyrene high-shear-modulus phase. The ceramic or glass grains in the matrix in different embodiments include Li-conducting garnets and/or Li-conducting sulfides. Li-conducting phosphates used in some embodiments include Li₃N, Li₃P, and LiPON.

The fully dense ceramic or other solid Li-conducting layer in different embodiments includes one or more of LiPON, Li₃N, Li₃P, Li-conducting garnets, Li-conducting sulfides, and Li-conducting phosphates.

Other materials which may be used are discussed in Christensen et al, JES, 159, R1, 2012 and references therein.

The electrochemical cell 100 includes an electrolyte solution 114 present in the positive electrode 104 and in some embodiments in the separator 106. In various embodiments, the electrolyte 114 is a Li-conducting liquid, gel, polymer, or other solid electrolyte. In the exemplary embodiment of FIG. 4, the electrolyte solution 114 includes a salt, LiPF₆ (lithium hexafluorophosphate), dissolved in an organic solvent mixture. The organic solvent mixture may be any desired solvent. In certain embodiments, the solvent may be dimethyl ether (DME), acetonitrile (MeCN), ethylene carbonate, or diethyl carbonate.

A barrier 116 separates the positive electrode 104 from a reservoir 118. The reservoir 118 may be any vessel suitable to hold oxygen supplied to and emitted by the positive electrode 104. While the reservoir 118 is shown as an integral member of the electrochemical cell 100 attached to the positive electrode 104, in one embodiment the reservoir 118 is the positive electrode 104 itself. Various embodiments of the reservoir 118 are envisioned, including rigid tanks, inflatable bladders, and the like. In FIG. 6, the barrier 116 is a mesh which permits oxygen and other gases to flow between the positive electrode 104 and the reservoir 118 while also preventing the electrolyte 114 from leaving the positive electrode 104. Alternatively, the retention of cell components such as volatile electrolyte, may be carried out separately from the individual cells, such that the barrier 116 is not required.

In the case in which the metal is Li, the electrochemical cell 100 discharges with lithium metal in the negative electrode 102 ionizing into a Li⁺ ion with a free electron e⁻. Li⁺ ions travel through the separator 106 in the direction indicated by arrow 120 toward the positive electrode 104. Oxygen is supplied from the reservoir 118 through the barrier 116 as indicated by the arrow 122. Free electrons e⁻ flow into the positive electrode 104 through the current collector 108 as indicated by arrow 124.

The oxygen atoms and Li⁺ ions within the positive electrode 102 form a discharge product 130 inside the positive electrode 104, aided by the optional catalyst material on the electrode particles 110. As seen in the following equations, during the discharge process metallic lithium is ionized, combining with oxygen and free electrons to form Li₂O₂ or Li₂O discharge product that may coat the surfaces of the carbon particles 110.

*Li → Li*⁺ + *e⁻* (negative electrode)

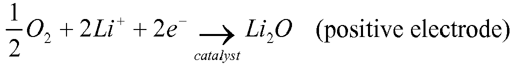

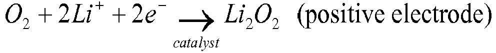

In contrast with the system of FIG. 3, the electrochemical cell 100 in some embodiments does not use air as an external source for oxygen. External sources, such as the atmosphere, include undesired gases and contaminants. Thus, while the oxygen that reacts electrochemically with the metal in a metal/oxygen battery may come from the air, the presence of CO₂ and H₂O in air make it an unsuitable source for some of the media in which the metal/oxygen reactions are carried out and for some of the products that form. For example, in the reaction of Li with oxygen in which Li₂O₂ is formed, H₂O and CO₂ can react with the Li₂O₂ to form LiOH and/or Li₂CO₃, which can deleteriously affect the performance and rechargeability of the battery. As another example, in a basic medium CO₂ can react and form carbonates that precipitate out of solution and cause electrode clogging.

In contrast to obtaining oxygen from ambient air, the electrochemical cell 100 stores oxygen within the cell or in a tank that is part of the battery system. In some embodiments which do not include an external or internal compressor, the electrochemical cell 100 uses electrochemical compression. Unlike electrochemical compression of hydrogen, in which a proton-conducting membrane is typically used, in the electrochemical cell 100 no oxygen-conducting membrane is required; rather, the oxygen is simply evolved from the metal / oxygen compound during charge, and consumed during discharge.

The electrochemical cell 100 thus makes use of oxygen (which may be pure or contain additional components) stored within a battery cell or external to a cell in a tank or other volume. The oxygen reacts electrochemically with the metal (which may include Li, Zn, Mg, Na, Fe, Al, Ca, Si, and others) to produce energy on discharge, and on charge the metal is regenerated and oxygen gas (and perhaps other species, such as H₂O) are evolved.

The electrochemical cell 100 thus provides a composite structure which has an additional layer of fully dense lithium-conducting ceramic (or glass, or other crystalline or amorphous solid lithium-ion conductor) situated between the layer of ceramic-embedded (or glass-embedded) polymer (or block copolymer) and the positive electrode. This additional layer inhibits or prevents swelling of the polymer layer with liquid electrolyte. In different embodiments, there are additional layers between the ceramic and the positive electrode (e.g., a porous polymer "separator" that contains electrolyte in its pores), and/or between the lithium metal and the polymer layer (e.g., another ceramic layer). The common features of the embodiments are the polymer layer embedded with lithium-conducting ceramic (or other solid) grains and the dense lithium-conducting ceramic (or other solid) layer situated between the polymer layer and the positive electrode such that the polymer layer does not absorb and transport liquid electrolyte to the lithium metal negative electrode.

Beneficially, the electrochemical cell 100 provides the ability to operate the battery at lower temperatures (e.g., between -40 and 70° C). The electrochemical cell 100 avoids aging mechanism such as lithium dendrites, lithium morphology change, internal shorts, and liquid electrolyte decomposition. The electrochemical cell 100 provides favorable mechanical properties (e.g., flexibility, high shear modulus) as well as low contact resistance between the lithium metal and the solid electrolyte (polymers adhere better than ceramics) while achieving high specific energy and specific power.

## Claims

1. An electrochemical cell (100) comprising:
a negative electrode (102) including a form of lithium;
a positive electrode (104) spaced apart from the negative electrode;
a separator (106) positioned between the negative electrode (102) and the positive electrode (104); and
a first lithium ion conducting and ionically insulating composite solid electrolyte layer (107) positioned between the negative electrode (102) and the positive electrode (104);
**characterized in that** the first lithium ion conducting and ionically insulating composite solid electrolyte layer (107) comprises a block copolymer matrix within which are embedded lithium-conducting particles of ceramic or glass; and a layer of fully dense lithium-conducting ceramic or glass.

2. The electrochemical cell (100) of claim 1, wherein the first lithium ion conducting and ionically insulating composite solid electrolyte layer (107) is positioned between the positive electrode (104) and the separator (106).

3. The electrochemical cell (100) of claim 1, wherein the first lithium ion conducting and ionically insulating composite solid electrolyte layer (107) is positioned between the negative electrode (102) and the separator (106).

4. The electrochemical cell (100) of claim 3, further comprising:
a second lithium ion conducting and ionically insulating composite solid electrolyte layer positioned between the positive electrode (104) and the separator (106).

5. The electrochemical cell (100) of claim 3, wherein the first lithium ion conducting and ionically insulating composite solid electrolyte layer (107) comprises:
a lithium conducting polymer layer; and
a fully dense lithium conducting layer.

6. The electrochemical cell (100) of claim 5, wherein the fully dense lithium conducting layer comprises:
a fully dense lithium-conducting ceramic.

7. The electrochemical cell (100) of claim 5, wherein the fully dense lithium conducting layer comprises:
a fully dense lithium-conducting glass.

8. The electrochemical cell (100) of claim 5, wherein:
the lithium conducting polymer layer has a thickness of between 1nm and 50 microns; and
the fully dense lithium conducting layer has a thickness of between 1 nm and 50 microns.

9. The electrochemical cell (100) of claim 8, wherein:
the lithium conducting polymer layer has a thickness of between 200 nm and 10 microns; and
the fully dense lithium conducting layer has a thickness of between 1 nm and 1 micron.

10. The electrochemical cell (100) of claim 8, wherein:
the lithium conducting polymer layer comprises one or more of polyethylene oxide (PEO), a block copolymer with PEO Li-conducting phase and polystyrene high-shear-modulus phase, Li-conducting garnets, Li-conducting sulfides, Li₃N, Li₃P, and LiPON; and
the fully dense lithium conducting layer comprises one or more of LiPON, Li₃N, Li₃P, Li-conducting garnets, Li-conducting sulfides, and Li-conducting phosphates.

11. A method of forming an electrochemical cell (100) comprising:
positioning a separator (106) between a negative electrode (102) including a form of lithium and a positive electrode (104); and
positioning a first lithium ion conducting and ionically insulating composite solid electrolyte layer (107) between the negative electrode (102) and the positive electrode (104);
wherein the first lithium ion conducting and ionically insulating composite solid electrolyte layer (107) comprises a block copolymer matrix within which are embedded lithium-conducting particles of ceramic or glass; and a layer of fully dense lithium-conducting ceramic or glass.

12. The method of claim 11, wherein positioning the first lithium ion conducting and ionically insulating composite solid electrolyte layer (107) comprises:
positioning the first lithium ion conducting and ionically insulating composite solid electrolyte layer (107) between the positive electrode (104) and the separator (106).

13. The method of claim 11, wherein positioning the first lithium ion conducting and ionically insulating composite solid electrolyte layer (107) comprises:
positioning the first lithium ion conducting and ionically insulating composite solid electrolyte layer (107) between the negative electrode (102) and the separator (106).

14. The method of claim 13, further comprising:
positioning a second lithium ion conducting and ionically insulating composite solid electrolyte layer between the positive electrode (104) and the separator (106).

15. The method of claim 13, wherein positioning the first lithium ion conducting and ionically insulating composite solid electrolyte layer (107) comprises:
positioning a first lithium ion conducting and ionically insulating composite solid electrolyte layer with a lithium conducting polymer layer and a fully dense lithium conducting layer between the negative electrode (102) and the separator (106).

16. The method of claim 15, wherein positioning the first lithium ion conducting and ionically insulating composite solid electrolyte layer comprises:
a fully dense lithium-conducting ceramic.

17. The method of claim 15, wherein the fully dense lithium conducting layer comprises:
positioning a first lithium ion conducting and ionically insulating composite solid electrolyte layer (107) with a fully dense lithium conducting layer between the negative electrode (102) and the separator (106).

18. The method of claim 15, wherein:
the lithium conducting polymer layer has a thickness of between 1nm and 50 microns; and
the fully dense lithium conducting layer has a thickness of between 1 nm and 50 microns.

19. The method of claim 18, wherein:
the lithium conducting polymer layer has a thickness of between 200 nm and 10 microns; and
the fully dense lithium conducting layer has a thickness of between 1 nm and 1 micron.

20. The method claim 18, wherein:
the lithium conducting polymer layer comprises one or more of polyethylene oxide (PEO), a block copolymer with PEO Li-conducting phase and polystyrene high-shear-modulus phase, Li-conducting garnets, Li-conducting sulfides, Li₃N, Li₃P, and LiPON; and
the fully dense lithium conducting layer comprises one or more of LiPON, Li₃N, Li₃P, Li-conducting garnets, Li-conducting sulfides, and Li-conducting phosphates.

## Patentansprüche

1. Elektrochemische Zelle (100) umfassend:
eine negative Elektrode (102), die eine Form von Lithium einschließt;
eine positive Elektrode (104), die zu der negativen Elektrode beabstandet ist;
einen Separator (106), der zwischen der negativen Elektrode (102) und der positiven Elektrode (104) positioniert ist; und eine erste Lithiumion-leitende und ionisch isolierende, zusammengesetzte Festelektrolytschicht (107), die zwischen der negativen Elektrode (102) und der positiven Elektrode (104) positioniert ist;
**dadurch gekennzeichnet, dass**
die erste Lithiumion-leitende und ionisch isolierende, zusammengesetzte Festelektrolytschicht (107) eine Block-Copolymermatrix umfasst, in der Lithium-leitende Partikel von Keramik oder Glas eingebettet sind; und eine Schicht von völlig dichter, Lithium-leitender Keramik oder völlig dichtem, Lithium-leitendem Glas.

2. Elektrochemische Zelle (100) nach Anspruch 1, wobei die erste Lithiumion-leitende und ionisch isolierende, zusammengesetzte Festelektrolytschicht (107) zwischen der positiven Elektrode (104) und dem Separator (106) positioniert ist.

3. Elektrochemische Zelle (100) nach Anspruch 1, wobei die erste Lithiumion-leitende und ionisch isolierende, zusammengesetzte Festelektrolytschicht (107) zwischen der negativen Elektrode (102) und dem Separator (106) positioniert ist.

4. Elektrochemische Zelle (100) nach Anspruch 3, ferner umfassend:
eine zweite Lithiumion-leitende und ionisch isolierende, zusammengesetzte Festelektrolytschicht, die zwischen der positiven Elektrode (104) und dem Separator (106) positioniert ist.

5. Elektrochemische Zelle (100) nach Anspruch 3, wobei die erste Lithiumion-leitende und ionisch isolierende, zusammengesetzte Festelektrolytschicht (107)
eine Lithium-leitende Polymerschicht und
eine völlig dichte, Lithium-leitende Schicht umfasst.

6. Elektrochemische Zelle (100) nach Anspruch 5, wobei die völlig dichte, Lithium-leitende Schicht
eine völlig dichte, Lithium-leitende Keramik umfasst.

7. Elektrochemische Zelle (100) nach Anspruch 5, wobei die völlig dichte, Lithium-leitende Schicht
ein völlig dichtes, Lithium-leitendes Glas umfasst.

8. Elektrochemische Zelle (100) nach Anspruch 5, wobei die Lithium-leitende Polymerschicht eine Dicke von 1 nm bis 50 Mikron aufweist und
die völlig dichte, Lithium-leitende Schicht eine Dicke von 1 nm bis 50 Mikron aufweist.

9. Elektrochemische Zelle (100) nach Anspruch 8, wobei die Lithium-leitende Polymerschicht eine Dicke von 200 nm bis 10 Mikron aufweist und
die völlig dichte Lithium-leitende Schicht eine Dicke zwischen 1 nm und 1 Mikron aufweist.

10. Elektrochemische Zelle (100) nach Anspruch 8, wobei die Lithium-leitende Polymerschicht eines oder mehrere von Polyethylenoxid (PEO), einem Block-Copolymer mit Li-leitender PEO-Phase und Polystyrolphase mit hohem Schermodul, Li-leitenden Granaten, Li-leitenden Sulfiden, Li₃N, Li₃P und LiPON umfasst und die völlig dichte, Lithium-leitende Schicht eines oder mehrere von LiPON, Li₃N, Li₃P, Li-leitenden Granaten, Li-leitenden Sulfiden und Li-leitenden Phosphaten umfasst.

11. Verfahren zur Bildung einer elektrochemischen Zelle (100), umfassend:
Positionieren eines Separators (106) zwischen einer negativen Elektrode (102), die eine Form von Lithium einschließt, und einer positiven Elektrode (104) und
Positionieren einer ersten Lithiumion-leitenden und ionisch isolierenden, zusammengesetzten Festelektrolytschicht (107) zwischen der negativen Elektrode (102) und der positiven Elektrode (104) ;
wobei die erste Lithiumion-leitende und ionisch isolierende, zusammengesetzte Festelektrolytschicht (107) eine Block-Copolymermatrix umfasst, in der Lithium-leitende Partikel von Keramik oder Glas eingebettet sind; und eine Schicht von völlig dichter Lithium-leitender Keramik oder völlig dichtem, Lithium-leitendem Glas.

12. Verfahren nach Anspruch 11, wobei das Positionieren der ersten Lithiumion-leitenden und ionisch isolierenden, zusammengesetzten Festelektrolytschicht (107)
Positionieren der ersten Lithiumion-leitenden und ionisch isolierenden, zusammengesetzten Festelektrolytschicht (107) zwischen der positiven Elektrode (104) und dem Separator (106) umfasst.

13. Verfahren nach Anspruch 11, wobei das Positionieren der ersten Lithiumion-leitenden und ionisch isolierenden, zusammengesetzten Festelektrolytschicht (107)
Positionieren der ersten Lithiumion-leitenden und ionisch isolierenden, zusammengesetzten Festelektrolytschicht (107) zwischen der negativen Elektrode (102) und dem Separator (106) umfasst.

14. Verfahren nach Anspruch 13, ferner umfassend:
Positionieren einer zweiten Lithiumion-leitenden und ionisch isolierenden, zusammengesetzten Festelektrolytschicht zwischen der positiven Elektrode (104) und dem Separator (106).

15. Verfahren nach Anspruch 13, wobei das Positionieren der ersten Lithiumion-leitenden und ionisch isolierenden, zusammengesetzten Festelektrolytschicht (107)
Positionieren einer ersten Lithiumion-leitenden und ionisch isolierenden, zusammengesetzten Festelektrolytschicht mit einer Lithium-leitenden Polymerschicht und einer völlig dichten, Lithium-leitenden Schicht zwischen der negativen Elektrode (102) und dem Separator (106) umfasst.

16. Verfahren nach Anspruch 15, wobei das Positionieren der ersten Lithiumion-leitenden und ionisch isolierenden, zusammengesetzten Festelektrolytschicht
eine völlig dichte, Lithium-leitende Keramik umfasst.

17. Verfahren nach Anspruch 15, wobei die völlig dichte, Lithium-leitende Schicht
Positionieren einer ersten Lithiumion-leitenden und ionisch isolierenden, zusammengesetzten Festelektrolytschicht (107) mit einer völlig dichten, Lithium-leitenden Schicht zwischen der negativen Elektrode (102) und dem Separator (106) umfasst.

18. Verfahren nach Anspruch 15, wobei
die Lithium-leitende Polymerschicht eine Dicke zwischen 1 nm und 50 Mikron aufweist und
die völlig dichte, Lithium-leitende Schicht eine Dicke von 1 nm bis 50 Mikron aufweist.

19. Verfahren nach Anspruch 18, wobei
die Lithium-leitende Polymerschicht eine Dicke von 200 nm bis 10 Mikron aufweist und
die völlig dichte, Lithium-leitende Schicht eine Dicke von 1 nm bis 1 Mikron aufweist.

20. Verfahren nach Anspruch 18, wobei
die Lithium-leitende Polymerschicht eines oder mehrere von Polyethylenoxid (PEO), einem Block-Copolymer mit Li-leitender PEO-Phase und Polystyrolphase mit hohem Schermodul, Li-leitenden Granaten, Li-leitenden Sulfiden, Li₃N, Li₃P und LiPON umfasst und die völlig dichte, Lithium-leitende Schicht eines oder mehrere von LiPON, Li₃N, Li₃P, Li-leitenden Granaten, Li-leitenden Sulfiden und Li-leitenden Phosphaten umfasst.

## Revendications

1. Pile électrochimique (100) comprenant :
une électrode négative (102) incluant une forme de lithium ;
une électrode positive (104) à l'écart de l'électrode négative ;
un séparateur (106) positionné entre l'électrode négative (102) et l'électrode positive (104) ; et
une première couche d'électrolyte solide composite conductrice de l'ion lithium et ioniquement isolante (107) positionnée entre l'électrode négative (102) et l'électrode positive (104) ;
**caractérisée en ce que**
la première couche d'électrolyte solide composite conductrice de l'ion lithium et ioniquement isolante (107) comprend une matrice de copolymère séquencé au sein de laquelle des particules conductrices du lithium en céramique ou verre sont incorporées ; et
une couche de céramique ou verre conductrice du lithium de pleine densité.

2. Pile électrochimique (100) selon la revendication 1, dans laquelle la première couche d'électrolyte solide composite conductrice de l'ion lithium et ioniquement isolante (107) est positionnée entre l'électrode positive (104) et le séparateur (106).

3. Pile électrochimique (100) selon la revendication 1, dans laquelle la première couche d'électrolyte solide composite conductrice de l'ion lithium et ioniquement isolante (107) est positionnée entre l'électrode négative (102) et le séparateur (106).

4. Pile électrochimique (100) selon la revendication 3, comprenant en outre :
une seconde couche d'électrolyte solide composite conductrice de l'ion lithium et ioniquement isolante positionnée entre l'électrode positive (104) et le séparateur (106).

5. Pile électrochimique (100) selon la revendication 3, dans laquelle la première couche d'électrolyte solide composite conductrice de l'ion lithium et ioniquement isolante (107) comprend :
une couche de polymère conductrice du lithium ; et
une couche conductrice du lithium de pleine densité.

6. Pile électrochimique (100) selon la revendication 5, dans laquelle la couche conductrice du lithium de pleine densité comprend :
une céramique conductrice du lithium de pleine densité.

7. Pile électrochimique (100) selon la revendication 5, dans laquelle la couche conductrice du lithium de pleine densité comprend :
un verre conducteur du lithium de pleine densité.

8. Pile électrochimique (100) selon la revendication 5, dans laquelle :
la couche de polymère conductrice du lithium a une épaisseur comprise entre 1 nm et 50 microns ; et
la couche conductrice du lithium de pleine densité a une épaisseur comprise entre 1 nm et 50 microns.

9. Pile électrochimique (100) selon la revendication 8, dans laquelle :
la couche de polymère conductrice du lithium a une épaisseur comprise entre 200 nm et 10 microns ; et
la couche conductrice du lithium de pleine densité a une épaisseur comprise entre 1 nm et 1 micron.

10. Pile électrochimique (100) selon la revendication 8, dans laquelle :
la couche de polymère conductrice du lithium comprend un ou plusieurs parmi le poly(oxyde d'éthylène) (PEO), un copolymère séquencé avec une phase conductrice du Li de PEO et une phase de polystyrène de haut module de cisaillement, des grenats conducteurs de Li, des sulfures conducteurs de Li, Li₃N, Li₃P, et LiPON ; et
la couche conductrice du lithium de pleine densité comprend un ou plusieurs parmi LiPON, Li₃N, Li₃P, des grenats conducteurs de Li, des sulfures conducteurs de Li, et des phosphates conducteurs de Li.

11. Procédé de formation d'une pile électrochimique (100) comprenant :
le positionnement d'un séparateur (106) entre une électrode négative (102) incluant une forme de lithium et une électrode positive (104) ; et
le positionnement d'une première couche d'électrolyte solide composite conductrice de l'ion lithium et ioniquement isolante (107) entre l'électrode négative (102) et l'électrode positive (104) ;
dans lequel la première couche d'électrolyte solide composite conductrice de l'ion lithium et ioniquement isolante (107) comprend une matrice de copolymère séquencé au sein de laquelle des particules conductrices du lithium en céramique ou verre sont incorporées ; et une couche de céramique ou verre conductrice du lithium de pleine densité.

12. Procédé selon la revendication 11, dans lequel le positionnement de la première couche d'électrolyte solide composite conductrice de l'ion lithium et ioniquement isolante (107) comprend :
le positionnement de la première couche d'électrolyte solide composite conductrice de l'ion lithium et ioniquement isolante (107) entre l'électrode positive (104) et le séparateur (106).

13. Procédé selon la revendication 11, dans lequel le positionnement de la première couche d'électrolyte solide composite conductrice de l'ion lithium et ioniquement isolante (107) comprend :
le positionnement de la première couche d'électrolyte solide composite conductrice de l'ion lithium et ioniquement isolante (107) entre l'électrode négative (102) et le séparateur (106).

14. Procédé selon la revendication 13, comprenant en outre :
le positionnement d'une seconde couche d'électrolyte solide composite conductrice de l'ion lithium et ioniquement isolante entre l'électrode positive (104) et le séparateur (106).

15. Procédé selon la revendication 13, dans lequel le positionnement de la première couche d'électrolyte solide composite conductrice de l'ion lithium et ioniquement isolante (107) comprend :
le positionnement d'une première couche d'électrolyte solide composite conductrice de l'ion lithium et ioniquement isolante avec une couche de polymère conductrice du lithium et une couche conductrice du lithium de pleine densité entre l'électrode négative (102) et le séparateur (106).

16. Procédé selon la revendication 15, dans lequel le positionnement de la première couche d'électrolyte solide composite conductrice de l'ion lithium et ioniquement isolante comprend :
une céramique conductrice du lithium de pleine densité.

17. Procédé selon la revendication 15, dans lequel la couche conductrice du lithium de pleine densité comprend :
le positionnement d'une première couche d'électrolyte solide composite conductrice de l'ion lithium et ioniquement isolante (107) avec une couche conductrice du lithium de pleine densité entre l'électrode négative (102) et le séparateur (106).

18. Procédé selon la revendication 15, dans lequel :
la couche de polymère conductrice du lithium a une épaisseur comprise entre 1 nm et 50 microns ; et
la couche conductrice du lithium de pleine densité a une épaisseur comprise entre 1 nm et 50 microns.

19. Procédé selon la revendication 18, dans lequel :
la couche du polymère conducteur du lithium a une épaisseur comprise entre 200 nm et 10 microns ; et
la couche conductrice du lithium de pleine densité a une épaisseur comprise entre 1 nm et 1 micron.

20. Procédé selon la revendication 18, dans lequel :
la couche de polymère conductrice du lithium comprend un ou plusieurs parmi le poly(oxyde d'éthylène) (PEO), un copolymère séquencé avec une phase conductrice du Li de PEO et une phase de polystyrène de haut module de cisaillement, des grenats conducteurs de Li, des sulfures conducteurs de Li, Li₃N, Li₃P, et LiPON ; et
la couche conductrice du lithium de pleine densité comprend un ou plusieurs parmi LiPON, Li₃N, Li₃P, des grenats conducteurs de Li, des sulfures conducteurs de Li, et des phosphates conducteurs de Li.
